# EUROPEAN PATENT APPLICATION

(11) **EP 4 826 846 A1**
(43) Date of publication of application: **21.10.2026**
(21) Application number: 26165976.7
(22) Date of filing: 19.03.2026
(51) Int. Cl.: H01M 10/613, H01M 10/647, H01M 10/6556

(54) **POUCH-TYPE BATTERY COOLING APPARATUS**

(30) Priority: 19.03.2025 KR 20250035505; 20.06.2025 KR 20250081892
(71) Applicant: SK Innovation Co., Ltd., Seoul 03188 (KR); SK On Co., Ltd., Seoul 03161 (KR)
(72) Inventor: CHO, June Ho, 34124 Daejeon (KR); KIM, Se Hyeon, 34124 Daejeon (KR); KIM, Tae Hyeon, 34124 Daejeon (KR); BAE, Sun Hyuk, 34124 Daejeon (KR); LEE, Jun Young, 34124 Daejeon (KR)
(74) Representative: Prüfer & Partner mbB Patentanwälte · Rechtsanwälte

(57) **Abstract**

The present disclosure relates to a pouch-type battery cooling apparatus for removing heat generated from a pouch-type battery (10). A pouch-type battery cooling apparatus according to an embodiment of the present disclosure includes a case (100) configured to accommodate a plurality of pouch-type batteries (10) and including a cooling fluid (11) in direct or indirect contact with the plurality of pouch-type batteries (10) and a support body (200, 211, 212, 213, 214) including a support plate (220, 220a, 220b) disposed between the plurality of pouch-type batteries (10) or pouch-type battery groups (20), the support plate (220, 220a, 220b) supporting the plurality of pouch-type batteries (10) or the pouch-type battery groups (20) by applying pressure in a thickness dimension of the plurality of pouch-type batteries (10), and a plurality of channels (240) formed inside the support plate (220, 220a, 220b), arranged along a planar dimension of the plurality of pouch-type batteries (10), and providing a flow path through which the cooling fluid (11) flows in a height dimension of the plurality of pouch-type batteries (10).

## Description

### [BACKGROUND OF THE INVENTION]

### 1. Technical Field

The present disclosure relates to a pouch-type battery cooling apparatus, and more particularly, to a pouch-type battery cooling apparatus for removing heat generated from a pouch-type battery.

### 2. Description of the Related Art

Conventional pouch-type battery cooling technologies have mainly used an air-cooling method to address heat generation problems.

Since a pouch-type battery has weak inherent rigidity, support between cells is essential, and structural support capable of applying constant pressure in a direction onto planar surface dimension is required.

In addition, the surface of the pouch-type battery is composed of materials such as electrodes and current collectors (e.g., Al, Cu), so that thermal conductivity is high and heat can spread widely. However, the pouch-type battery includes various layers such as electrodes/separators/electrolytes stacked in a thickness dimension, so that thermal conductivity is low due to the influence of interfacial resistance of each layer and insulating materials, making heat transfer in the thickness dimension very disadvantageous.

Accordingly, heat generated inside the pouch-type battery cannot easily escape in the thickness dimension, which may cause significant heat concentration and local temperature rise. Thus, technology for effectively controlling heat is required.

Furthermore, when thermal runaway occurs in a pouch-type battery system, rapid heat transfer between adjacent cells may occur, thereby significantly compromising the safety of the entire system.

### [SUMMARY OF THE INVENTION]

Embodiments of the present disclosure may provide a pouch-type battery cooling apparatus capable of effectively removing heat generated from a pouch-type battery by allowing cooling fluid to naturally convect between pouch-type batteries.

According to an embodiment of the present invention, provided herein is a pouch-type battery cooling apparatus comprising: a case configured to accommodate a plurality of pouch-type batteries and a cooling fluid in direct or indirect contact with the plurality of pouch-type batteries; and a support body comprising: a support plate disposed between adjacent pouch-type batteries or groups of pouch-type batteries, wherein the support plate is arranged to support the plurality of pouch-type batteries by applying pressure in a thickness dimension to the pouch-type batteries or groups thereof; wherein the support plate comprises a plurality of channels formed inside the support plate extending in a height dimension inside the support plate, arranged along the support plate in a planar dimension, and providing a plurality of flow paths through which the cooling fluid may flow, e.g., in a dimension parallel to the height dimension of the plurality of pouch-type batteries.

In some non-limiting embodiments, the case may be formed of or comprise a metallic material and may comprise a side portion, a bottom portion, and a cover portion, wherein the side portion comprises a heat insulating material.

In some non-limiting embodiments, the cooling apparatus further comprises an air-cooling type or liquid-cooling type external cooling module coupled to one or both of the bottom portion or the cover portion.

In some non-limiting embodiments, the metallic material of the case may comprise aluminum or stainless steel, and the heat insulating material of the side portion may be stacked on an outer side of the metallic material or may be stacked between layers of the metallic material.

In some non-limiting embodiments, the support body may comprise a partition portion coupled to the bottom portion and the cover portion of the case to isolate adjacent pouch-type batteries or groups thereof from each other.

In some non-limiting embodiments, the support body may comprise the partition portion and the support plate comprising channels formed on one side of the partition portion. Optionally, the support body comprises a second support plate comprising a plurality of channels extending in a height dimension inside the second support plate.

In some non-limiting embodiments, the partition portion comprises a first partition plate and a second partition plate, and a heat insulating material disposed between the first partition plate and the second partition plate.

In some non-limiting embodiments, the heat insulating material may comprise mica or aerogel.

In some non-limiting embodiments, an extension portion may be formed at each of an upper end and a lower end of the partition portion, wherein the partition portion is coupled to the bottom portion and the cover portion through each extension portion.

In some non-limiting embodiments, the plurality of channels extend from an inlet on a lower portion of the support body to an outlet on an upper portion of the support body, and are linearly-shaped.

In some non-limiting embodiments, the plurality of channels extend from an inlet on a lower portion of the support body to an outlet on an upper portion of the support body, and are C-shaped.

In some non-limiting embodiments, side surfaces of the plurality of pouch-type batteries may be in direct contact with the cooling fluid, and planar surfaces of the plurality of pouch-type batteries may be in indirect contact with the cooling fluid through the plurality of channels.

In some non-limiting embodiments, by inducing the cooling fluid inside the case to form natural convection between the pouch-type batteries, heat generated from the pouch-type batteries may be effectively removed.

In some non-limiting embodiments, particularly, since the cooling fluid spontaneously circulates and releases heat without external energy by utilizing natural convection, energy efficiency may be improved.

In some non-limiting embodiments, by performing direct contact cooling and indirect contact cooling on side surfaces and planar surfaces of the pouch-type batteries, respectively, cooling efficiency may be increased, and a temperature distribution of the batteries may be uniformly maintained, thereby improving safety and performance of the batteries.

### [BRIEF DESCRIPTION OF THE DRAWINGS]

The above and other objects, features and other advantages of the present disclosure will be more clearly understood from the following detailed description taken in conjunction with the accompanying drawings, in which:
FIG. 1 is a view illustrating a pouch-type battery cooling apparatus having a channel-type support body (linear flow path) according to an embodiment of the present disclosure.
FIG. 2A and FIG. 2B are views illustrating a side portion of a case according to an embodiment of the present disclosure.
FIG. 3 is a view illustrating a pouch-type battery cooling apparatus coupled with an air-cooling type or liquid-cooling type external cooling module according to an embodiment of the present disclosure.
FIG. 4 is a view illustrating a channel-type support body of a pouch-type battery cooling apparatus (linear flow path) according to an embodiment of the present disclosure.
FIG. 5 is a view illustrating a pouch-type battery cooling apparatus having a partition channel-type support body (linear flow path) according to an embodiment of the present disclosure.
FIG. 6 is a view illustrating a partition channel-type support body of a pouch-type battery cooling apparatus (linear flow path) according to an embodiment of the present disclosure.
FIG. 7 is a view illustrating a pouch-type battery cooling apparatus having a partition channel-type support body (C-shaped flow path) according to an embodiment of the present disclosure.
FIG. 8 is a view illustrating a partition channel-type support body of a pouch-type battery cooling apparatus (C-shaped flow path) according to an embodiment of the present disclosure.
FIG. 9 is a view illustrating a pouch-type battery cooling apparatus having a heat-insulating partition channel-type support body (linear flow path) according to an embodiment of the present disclosure.
FIG. 10 is a view illustrating a heat-insulating partition channel-type support body of a pouch-type battery cooling apparatus (linear flow path) according to an embodiment of the present disclosure.
FIG. 11 is a schematic diagram illustrating an application of a pouch-type battery cooling apparatus according to an embodiment of the present disclosure.

### [DETAILED DESCRIPTION OF THE INVENTION]

Hereinafter, exemplary embodiments of the present disclosure will be described in detail with reference to the accompanying drawings so that those skilled in the art may readily practice the present disclosure.

Also, as used herein, the terms "upper", "lower", "bottom", "side", "lateral", or the like are used with reference to the respective positions or orientations, respectively, shown in the drawings for representing a positional relationship in the given context. Specifically, the terms "upper", "lower", and "bottom" refer to a height dimension of a pouch-type battery perpendicular to a planar dimension and a thickness dimension of the pouch-type battery. In a three-dimensional Cartesian coordinate system, the planar dimension corresponds to the X dimension, the thickness dimension to the Y dimension, and the height dimension to the Z dimension.

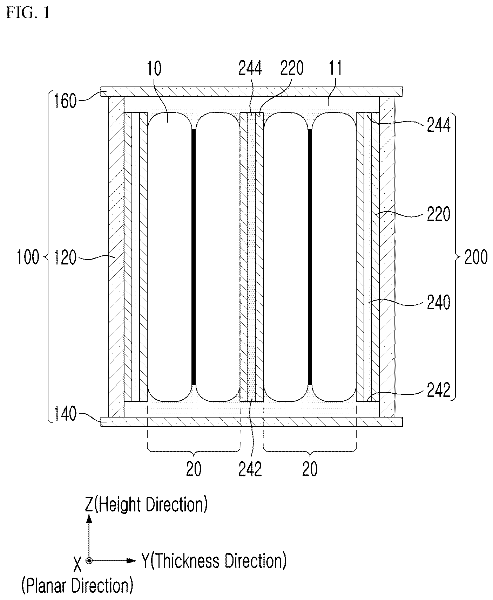

FIG. 1 illustrates a pouch-type battery cooling apparatus according to an embodiment of the present disclosure.

Referring to FIG. 1, the pouch-type battery cooling apparatus depicted therein includes (i) a case 100 configured to accommodate a plurality of pouch-type batteries 10 and a cooling fluid 11 in direct or indirect contact with the pouch-type batteries 10 and (ii) a support body 200 including a support plate 220 disposed between adjacent pouch-type batteries 10 or between groups of pouch-type batteries 20. The support plate 220 provides support to a pouch-type battery 10 or groups thereof 20 by applying pressure, e.g., to a broad side of the pouch-type battery 10 in a thickness dimension (e.g., Y dimension). A plurality of channels 240 are formed inside the support plate 220, extending through the support plate in a height dimension and arranged along a planar dimension (e.g., X dimension) along the support plate 220 (which is parallel to the planar dimension of the pouch-type batteries 10). The channels 240 provide a plurality of flow paths through which the cooling fluid 11 can flow. In certain embodiments, such as shown in FIG. 1, the pouch-type cooling apparatus includes a support plate 220 as described herein, for example, two, three, four, five, or more support plates.

The case 100, according to an embodiment of the present disclosure accommodates the plurality of pouch-type batteries 10 therein and includes the cooling fluid that removes heat by coming into direct or indirect contact with the pouch-type batteries 10.

The case 100 has a sealed structure to accommodate the pouch-type batteries 10 and the cooling fluid 11.A cooling fluid supply port and a cooling fluid discharge port may be provided on one or more sides of the case 100. In certain embodiments, the case 100 is formed of or comprises a metallic material. To prevent leakage of the cooling fluid 11 and ensure strength and corrosion resistance, the case 100 may be formed of or comprise, for example, aluminum or stainless steel.

The inside of the case 100 may be filled with a cooling fluid 11 exhibiting high electrical insulation and high heat transfer characteristics. Not-limiting examples of cooling fluid that can be used include silicone oil, synthetic ester, fluorine-based fluid, or the like. For example, in certain embodiments, the cooling fluid 11 comprises a hydrofluoroether (e.g., those sold by Novec), a fluorinated ketone (e.g., those sold by Novec), a perfluorinated compound such as perfluorohexane, perfluoro(2-butyl-tetrahydrofurane), mineral oil, synthetic oil (e.g., polyalphaolefin, PAO), methoxy-nonafluorobutane, or the like. The cooling fluid 11 may be in direct contact with the pouch-type batteries 10, in indirect contact therewith through a cooling flow path provided by cooling fluid 11 within the plurality of channels 240 in the one or more support plates 220, thereby effectively removing heat from the batteries, or the cooling fluid 11 may be in both direct and indirect contact with the pouch-type batteries 10.

The case 100, according to an embodiment of the present disclosure, is formed of or comprises a metallic material and includes a side portion 120 (or side walls), a bottom portion 140, and a cover portion 160. At least the side portion 120 includes a heat insulating material 180 but the bottom portion 140 and/or cover portion 160 may each also independently include a heat insulation material, which may be the same or different from the heat insulating material of the side portion 120. In one embodiment, the side portion 120, the bottom portion 140, and the cover portion 160, are joined to form a case 100 having a hexahedral shape.

The case 100 (or component side portion 120, bottom portion 140, and cover portion 160 thereof) may be formed of or comprise a metallic material to impart desirable characteristics to the case, for example, prevent leakage of the cooling fluid 11. As such, the case material ideally displays high strength and corrosion resistance, for example, aluminum or stainless steel. Aluminum has lightweight properties and excellent thermal conductivity, and stainless steel has excellent corrosion resistance and mechanical strength.

By including a heat insulating material 180 in at least the side portion 120 (but optionally also the bottom portion 140 and/or cover portion 160), transfer of internal heat to the outside is reduced or prevented, thereby reducing fluctuations in internal temperature caused by changes in the external environment.

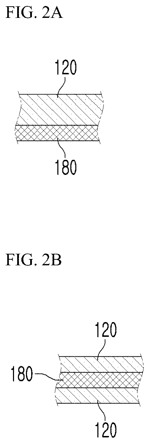

As shown in FIGS. 2A and 2B, the heat insulating material 180 may be stacked or layered on an outer-facing side of the side portion 120, which as part of the case, may be formed of or comprise a metallic material, or may be disposed between layers of the side portion 120, also which may be formed of or comprise a metallic material. In certain embodiments, mica and/or aerogel is used as the heat insulating material 180.

The bottom portion 140 and the cover portion 160 of the case 100 are each structured and arranged together with the side portion 120 to seal the pouch-type batteries 10 and the cooling fluid 11 therein. A supply port for introducing cooling fluid 11 into the case 100 may be disposed on the case, e.g., on the cover portion 160, and a discharge port for draining the case 100 of the cooling fluid 11 may be disposed in the bottom portion 140.

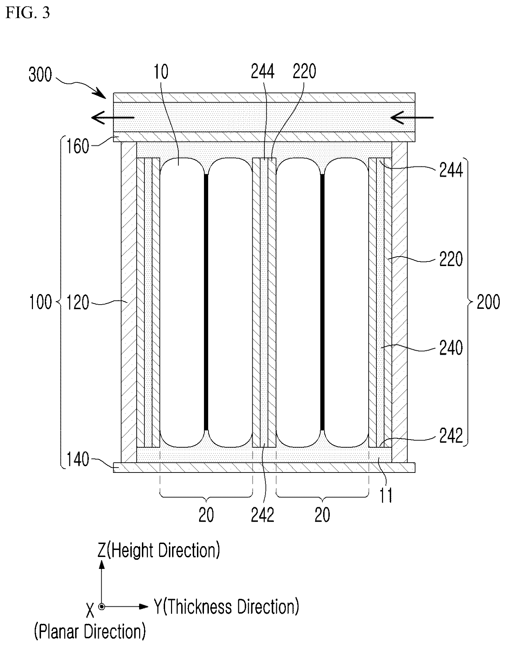

As shown in FIG. 3, in one embodiment, an external cooling module 300 may be coupled to the case 100 to effectively control the temperature of the internal cooling fluid 11 therein. The external cooling module 300 may be an air-type or liquid-cooling type of module. In such embodiments, the portion of the case 100 in contact with the external cooling module 300, for example, the cover portion 160 as shown in FIG. 3, may not include an insulating material.

In those embodiments not including an external cooling module, each of the bottom portion 140 and the cover portion 160 may comprise heat insulating material 180. Though not shown, the external cooling module 300 may equally be in contact with the bottom portion 140 or each of the cover portion 160 and bottom portion 140 of the case 100.

Without wishing to be bound by theory, coupling the external cooling module 300 to the cover portion 160 may introduce a natural convective flow of the cooling fluid 11 inside the case 100. That is, heat from the internal cooling fluid 11 discharged to the outside by the external cooling module 300 may further improve a cooling effect.\

In embodiments using an air-cooling type of external cooling module 300, external air is circulated to release heat generated from the cooling fluid 11 and the pouch-type batteries 10 to the outside through a heat sink or a heat dissipation structure formed on the bottom portion 140 or the cover portion 160 of the case 100.

In embodiments using a liquid-cooling type of external cooling module 300, a cooling liquid, which is separate from the cooling liquid 11 inside the case, passes through the bottom portion 140 or the cover portion 160 of the case 100 or flows through a cooling pipe to remove internal heat.

Accordingly, by coupling of an air-cooling type or liquid-cooling type external cooling module 300 the cooling fluid 11 inside the case 100 can be additionally cooled from the outside, thereby improving cooling efficiency of the pouch-type batteries 10 and employing natural convection of the cooling fluid 11.

According to an embodiment of the present disclosure the support body 200 is disposed inside the case 100 and is installed between adjacent batteries within the plurality of pouch-type batteries 10 or groups thereof 20 to provide structural support to the pouch-type batteries 10 or groups thereof 20 and suppress swelling or deformation of the pouch-type batteries. A cooling flow path may be formed by within the support body 200 by including support plate 220 comprising a plurality of channels 240, as described herein.

The support plate 220 may be formed of or comprise a metallic material displaying high strength, corrosion resistance, and high thermal conductivity, for example, aluminum or stainless steel.

According to an embodiment of the present disclosure, a plurality of channels 240 may be formed inside the support plate 220, are arranged in the support plate 220 along the planar dimension (X dimension), and extend within the support plate 200 in the height dimension (Z dimension) to provide a path through which the cooling fluid 11 may flow.

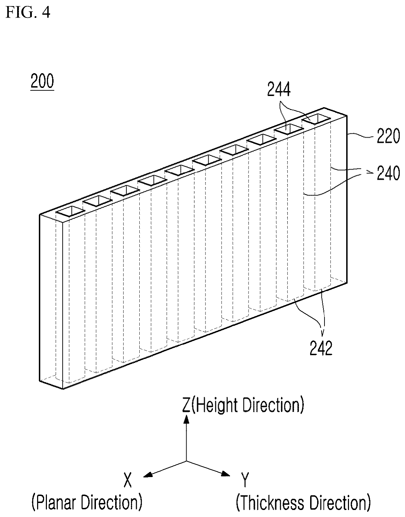

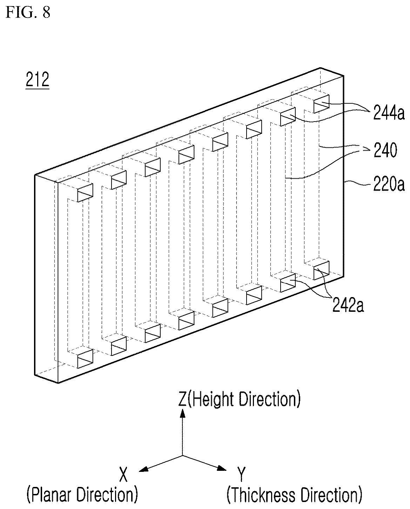

The cross-sectional shape of the channel is not particularly limited. For example, in one embodiment, the channels 240 may have cross-sections that are circular or rectangular shape. The flow path of the cooling fluid 11 is likewise not limited. In certain embodiments, a flow path may be formed as a linear flow path as shown in FIG. 4, in which inlets 242 and outlets 244 are substantially aligned in a height dimension (or Z dimension), or as a C-shaped flow path, such as shown in FIG. 8, in which the inlets 242 and the outlets 244 of each channel 240 are each disposed on a side support plate 220.

As shown in FIG. 4, a plurality of channels 240 are arranged inside the support plate 220 along the planar dimension (X dimension) of the batteries and extend in the height dimension (Z dimension), thereby providing a flow path through which the cooling fluid 11 can flow from a lower portion to an upper portion of the support plate 220. Inlets 242 and outlets 244 of the channels 240 may be provided on a lower surface and an upper surface of the support plate 220, respectively, to provide a linear flow path.

The structure of the channels 240 takes advantage of natural convective forces by the cooling fluid 11 inside the case 100, allowing heat generated from the pouch-type batteries 10 to be smoothly transferred upward and effectively removed. In particular, by utilizing natural convection, the cooling fluid 11 spontaneously circulates and releases heat without providing any external energy, thereby improving energy efficiency and preventing performance degradation caused by heat generation.

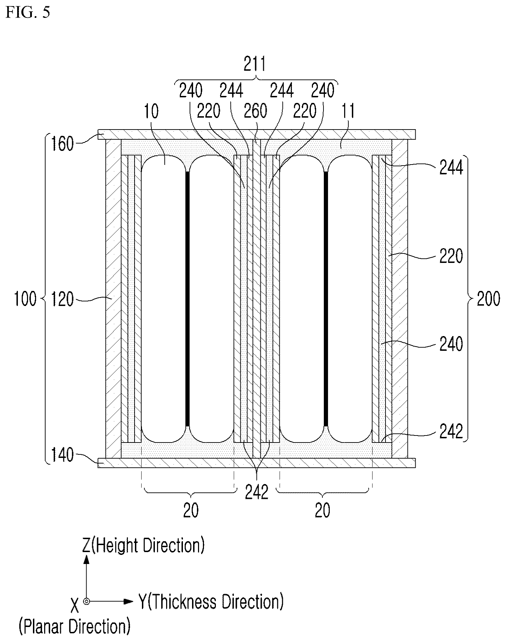

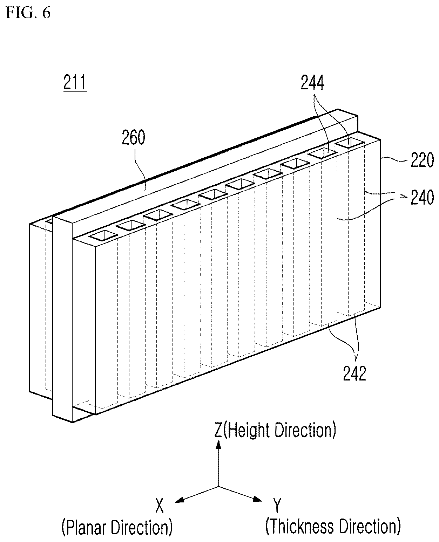

As shown in FIG. 5 and FIG. 6, the support bodies 200, 211 according to an embodiment of the present disclosure may include a partition portion 260, the support plate 220 formed on one side or both sides of the partition portion 260, and the channels 240 formed inside the support plate 220.

In another embodiment, the support body 211 may include a support plate 220 may include a partition portion 260. A the support plate 220 comprises a partition portion 260 disposed between two support plate sides and a plurality of channels on either side of the partition portion 260 between the partition portion 260 and the support plate sides and extending through the support plate in a height dimension and arranged along a planar dimension (e.g., X dimension) along the support plate 220 which is parallel to the planar dimension of the pouch-type batteries formed on one side or both sides of the partition portion 260, and the channels 240 formed inside the support plate 220.

As shown in FIG. 5, the partition portion 260 may be coupled to the bottom portion 140 and the cover portion 160 of the case 100 to physically separate pouch-type batteries 10 or groups thereof 20 from each other.

During manufacture, support plate(s) 220 may be integrally formed on one side or both sides of the partition portion 260, or may be separately formed by assembly or welding. In an embodiment, a support plate 220 having a plurality of channels 240 may be formed therein may be disposed on each sides of the partition portion 260.

By including a partition portion 260, heat transfer paths between the pouch-type batteries 10 or groups thereof 20 may be blocked, thereby reducing risks such as thermal runaway while simultaneously improving cooling performance.

FIG. 5 illustrates one embodiment of a pouch-type battery cooling apparatus having a partition channel-type support body FIG. 6 illustrates one embodiment of a partition channel-type support body of a pouch-type battery cooling apparatus.

According to the embodiment of FIGS. 5, support bodies 200, 211 are disposed on opposing or peripheral sides of each pouch-type battery group 20. A support body 200 having a structure comprising a support plate 220 with channels 240 may be disposed on peripheral sides of pouch-type battery groups 20, and a support body 211 including the partition portion 260 may be disposed between pouch-type battery groups 20.

Referring to FIGS. 5 and 6, the partition portion 260 may have a linear plate shape and be coupled to each of the bottom portion 140 and the cover portion 160 of the case 100 to isolate adjacent pouch-type battery groups 20. Channels 240 are formed inside the support plates 220 extending in a height dimension (Z dimension). In FIGS. 5 and 6, the channels 240 form a linear path between an inlet 242 on an upper surface of the support plate 220 and an outlet 244 on a lower surface of the support plate 220.

In certain embodiments, the partition portion 260 is coupled to the bottom portion 140 and the cover portion 160 of the case 100 and the support plates 220 on each side of the partition portion 260 have a smaller height dimension than the partition portion 260, such that the opening created the difference in height of the partition portion 260 and support plates 220 form the outlet 244 and the inlet 242.

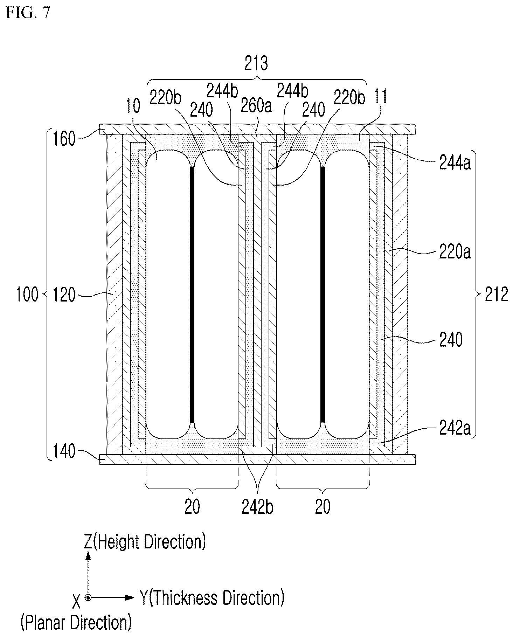

FIG. 7 illustrates a pouch-type battery cooling apparatus having a partition channel-type support body according to another embodiment of the present disclosure. FIG. 8 illustrates a partition channel-type support body of a pouch-type battery cooling apparatus according to another embodiment of the present disclosure.

According to the embodiment of FIG. 7, support bodies 212, 213 are disposed on peripheral or opposing sides of each pouch-type battery group 20, respectively. Support bodies 212, 213 comprising support plates 220a, 220b and channels 240 are disposed on peripheral or opposing sides of each pouch-type battery group 20, and the support body 213 including a partition portion 260a is formed between the pouch-type battery groups 20.

In this embodiment, the support body 213 itself may function as a partition portion 260a wherein the support body 213 is coupled to each of the bottom portion 140 and the cover portion 160 of the case 100 to isolate adjacent pouch-type battery groups 20. In FIG. 7, the outlets 244a, 244b and the inlets 242a, 242b are each formed on a side wall of the support plates 220a, 220b, thereby providing channels 240 having a C-shape. FIG. 8 provides a view of just the support plates 220a, 220b with the C-shaped channels.

When the support body 213 performs a partition function, channels 240 providing C-shaped flow paths may be formed on both sides of a central support body 213. When the support body 212 is located on peripheral side of each pouch-type battery 10, channels 240 providing a C-shaped flow path may be formed in one dimension, such as shown in FIG. 7.

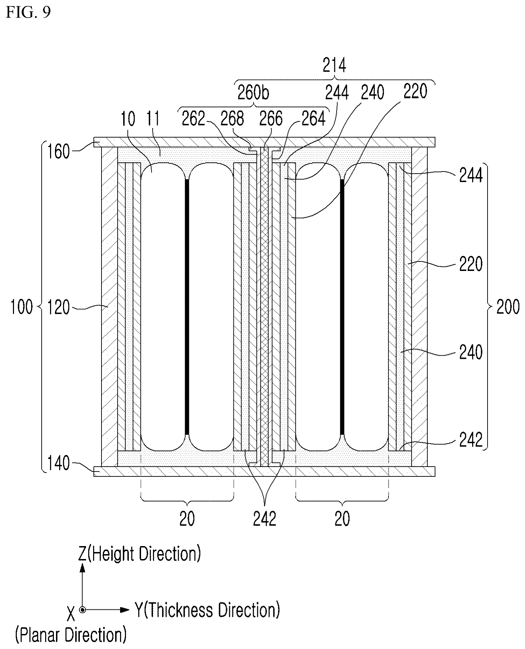

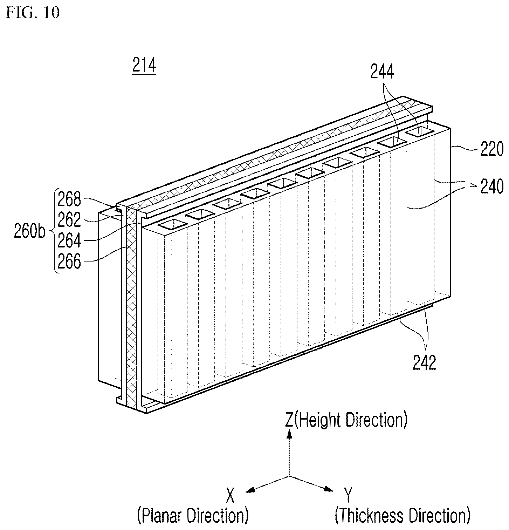

FIG. 9 illustrates a pouch-type battery cooling apparatus having a heat-insulating partition channel-type support body according to an embodiment of the present disclosure. FIG. 10 illustrates a heat-insulating partition channel-type support body of a pouch-type battery cooling apparatus according to an embodiment of the present disclosure.

According to the embodiments of FIG. 9, the support bodies 200, 214 are disposed on opposing or peripheral sides of each pouch-type battery group 20. Specifically, the support body 200 comprising a support plate 220 with channels 240 is disposed on peripheral side of each pouch-type battery group 20, and the support body 214 comprising the partition portion 260b is disposed between the pouch-type battery groups 20.

Referring to FIGS. 9 and 10, the partition portion 260b may include a heat insulating material 266 between a first partition plate 262 and a second partition plate 264. The heat insulating material 266 is inserted between the first partition plate 262 and the second partition plate 264 to block heat transfer between pouch-type battery groups 20.

As described above, a heat insulating material such as mica or aerogel, may be used as a heat insulating material 266. Mica has excellent insulation and heat resistance properties and can be processed into a thin plate structure, so it can easily be disposed between the first partition plate 262 and the second partition plate 264. Aerogel is a heat insulating material 266 having a fine pore structure, has heat blocking performance and heat resistance, and enables lightweighting. The selection of a heat insulating material 266 may be appropriately applied according to the operating environment or design of the pouch-type battery cooling apparatus.

In addition, the heat insulating material 266 may be disposed to completely fill an internal space of the partition portion 260b, or may be partially disposed as needed. Including a heat insulating material within the support body 214 can further improve heat transfer blocking performance between the pouch-type batteries 10.

As shown in FIG. 9 and according to an embodiment of the present disclosure, extension portions 268 may be formed at an upper end and a lower end of the partition portion 260b, to increase the coupling surface area between the partition portion 260b and each of the bottom portion 140 and the cover portion 160 of the case 100. In an embodiment, the extension portion 268 may be L-shaped.

The extension portions 268 increase a contact area with the cover portion 160 and the bottom portion 140 of the case 100 at the upper end and the lower end of the partition portion 260b to improve coupling strength, and allow the partition portion 260b to effectively support pressure applied in the thickness dimension (Y dimension) of the pouch-type batteries 10. These extension portions 268 make the partition portion 260b structurally stable and can facilitate position fixation of the partition portion 260b without obstructing the flow path through which the cooling fluid 11 flows.

As described above, the channels 240 and the partition structure according to various embodiments of the present disclosure induce natural convective flow of the cooling fluid 11 inside the case 100 between the pouch-type batteries 10, thereby allowing heat generated from the pouch-type batteries 10 to be smoothly transferred upward and effectively removed.

In addition, by isolating adjacent pouch-type batteries 10 or pouch-type battery groups 20 using the partition structure, heat transfer paths and gas movement is effectively blocked, thereby decreasing risks such as thermal runaway, and further improving cooling performance.

According to an embodiment of the present disclosure, side surfaces of the pouch-type batteries 10 may be in direct contact with the cooling fluid 11, whereas other surfaces, such as the broader planar surfaces of the pouch-type batteries 10, may be in indirect contact with the cooling fluid 11 through the channels 240.

The side surfaces (narrower surfaces) of the pouch-type batteries 10 may be in direct contact with the cooling fluid 11. The cooling fluid 11 inside the case 100 and may flow directly along the side surfaces of the pouch-type batteries 10 to effectively remove heat. This is to efficiently remove heat generated from the battery through the side surfaces of the pouch-type batteries 10.

The planar surfaces (broader surfaces) of the pouch-type batteries 10 are positioned adjacent to the channels 240 of the support body 200 and therefore be in indirect contact with the cooling fluid 11 flowing through the channels 240. The channels 240 according to an embodiment are formed inside the support plates 220, 220a, 220b and may provide a flow path extending in the height dimension. In this case, the cooling fluid 11 flowing in the channels 240 exchanges heat with the planar surfaces of the pouch-type batteries 10 without direct contact, but transfers heat along a side wall of the support plates 220, 220a, 220b.

As described above, the pouch-type battery cooling apparatus according to an embodiment of the present disclosure performs direct contact cooling and indirect contact cooling on the side surfaces and the planar surfaces of the pouch-type batteries 10, respectively, thereby increasing cooling combined.

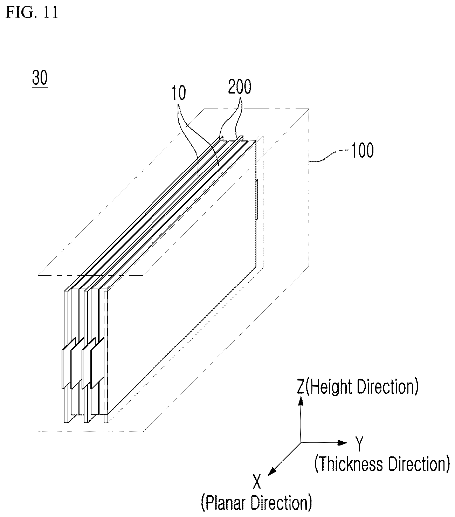

FIG. 11 is a schematic diagram illustrating an application of a pouch-type battery cooling apparatus according to an embodiment of the present disclosure, showing a battery module 30 including a plurality of pouch-type batteries 10 and pouch-type battery groups.

The pouch-type battery 10 according to an embodiment of the present disclosure may be applied to an Energy Storage System (ESS) or an Electric Vehicle (EV).

Specifically, the pouch-type battery 10 may be configured as a 4P50S type for EVs or a 2P120S type for ESSs. This can correspond to a system required capacity and voltage by combining the number of cells connected in parallel (P) and the number of cells connected in series (S).

The case 100 according to an embodiment accommodates the plurality of pouch-type batteries 10 and the pouch-type battery groups, and may include a cooling fluid 11 therein.

Referring to FIG. 11, a planar dimension (X dimension) formed along the longest side of the pouch-type battery 10, a thickness dimension (Y dimension) formed along the thinnest surface of the pouch-type battery 10, and a height dimension (Z dimension) formed along a width dimension of the pouch-type battery 10 may be indicated.

The support body 200 is disposed inside the case 100 and is positioned between the pouch-type batteries 10 or the pouch-type battery groups to support the pouch-type batteries 10 or the pouch-type battery groups by applying pressure in the thickness dimension (Y dimension) of the pouch-type batteries 10.

In addition, the support body 200 includes a plurality of channels therein, which are arranged along the planar dimension (X dimension) of the pouch-type batteries 10 and extend in the height dimension (Z dimension) to provide a flow path through which the cooling fluid 11 flows.

This channel structure induces the cooling fluid 11 inside the case 100 to form natural convection between the pouch-type batteries 10, allowing heat generated from the pouch-type batteries 10 to be smoothly transferred upward and effectively removed. In particular, by utilizing natural convection, the cooling fluid 11 spontaneously circulates and releases heat without external energy, thereby improving energy efficiency.

In addition, the pouch-type battery cooling apparatus according to an embodiment of the present disclosure performs direct contact cooling and indirect contact cooling on the side surfaces and the planar surfaces of the pouch-type batteries 10, respectively, thereby increasing cooling efficiency and maintaining a uniform temperature distribution of the batteries to improve safety and performance of the batteries.

## Claims

1. A pouch-type battery cooling apparatus comprising:
a case (100) configured to accommodate a plurality of pouch-type batteries (10) and a cooling fluid (11) in direct or indirect contact with the plurality of pouch-type batteries (10); and
a support body (200, 211, 212, 213, 214) comprising:
a support plate (220, 220a, 220b) disposed between adjacent pouch-type batteries (10) or groups (20) thereof,
wherein the support plate (220, 220a, 220b) is arranged to apply pressure in a thickness dimension to the pouch-type batteries (10) or groups (20) thereof; and
wherein the support plate (220, 220a, 220b) comprises a plurality of channels (240) extending in a height dimension inside the support plate (220, 220a, 220b) and arranged along a planar dimension of the support plate (220), thereby providing a plurality of flow paths through which the cooling fluid (11) may flow.

2. The pouch-type battery cooling apparatus of claim 1, wherein the case (100) comprises a metallic material, and wherein the case comprises a side portion (120), a bottom portion (140), and a cover portion (160), wherein the side portion (120) comprises a heat insulating material (180).

3. The pouch-type battery cooling apparatus of claim 2, further comprising an air-cooling type or liquid-cooling type external cooling module (300) coupled to the bottom portion (140) or the cover portion (160).

4. The pouch-type battery cooling apparatus of claim 2 or 3, wherein the metallic material comprises aluminum or stainless steel and wherein the heat insulating material (180) of the side portion (120) is stacked on an outer side of the metallic material or is stacked between layers of the metallic material.

5. The pouch-type battery cooling apparatus of any one of the claims 2 to 4, wherein the support body (211, 213, 214) comprises a partition portion (260, 260a, 260b) coupled to the bottom portion (140) and to the cover portion (160) of the case (100), and wherein the partition portion (260, 260a, 260b) isolates adjacent pouch-type batteries (10) or groups (20) thereof from each other.

6. The pouch-type battery cooling apparatus of claim 5, wherein the support body (211, 213, 214) comprises the partition portion (260, 260a, 260b) and the support plate (220, 220a, 220b) disposed on one side or both sides of the partition portion (260, 260a, 260b), comprising a plurality of channels (240) extending in a height dimension inside the support plate (220).

7. The pouch-type battery cooling apparatus of claim 5 or 6, wherein the partition portion (260b) comprises a first partition plate (262) and a second partition plate (264) and a heat insulating material (266) disposed between the first partition plate (262) and the second partition plate (264).

8. The pouch-type battery cooling apparatus of claim 7, wherein the heat insulating material (266) comprises mica or aerogel.

9. The pouch-type battery cooling apparatus of any one of the claims 5 to 8, wherein an extension portion (268) is formed at each of an upper end and a lower end of the partition portion (268), and wherein the partition portion (260, 260a, 260b) is coupled to the bottom portion (140) and the cover portion (160) through each extension portion (268).

10. The pouch-type battery cooling apparatus of any one of the preceding claims, wherein the plurality of channels (240) extend from an inlet (242) on a lower portion to an outlet (244) on an upper portion of the support body (200, 214), and are linearly shaped.

11. The pouch-type battery cooling apparatus of claim 1, wherein the plurality of channels (240) extend from an inlet (242a, 242b) on a lower portion to an outlet (244a, 244b) on an upper portion of the support body (212, 213), and are C-shaped.

12. The pouch-type battery cooling apparatus of any one of the preceding claims, wherein side surfaces of the plurality of pouch-type batteries (10) are in direct contact with the cooling fluid (11), and wherein planar surfaces of the plurality of pouch-type batteries (10) are in indirect contact with the cooling fluid (11) through the plurality of channels (240).
